# EUROPÄISCHE PATENTSCHRIFT

(11) **EP 2 000 277 B1**
(45) Veröffentlichungstag und Bekanntmachung des Hinweises auf die Patenterteilung: **23.12.2009**
(21) Anmeldenummer: 08009254.7
(22) Anmeldetag: 20.05.2008
(51) Int. Cl.: B29C 45/00, B29C 45/16, B60H 1/24

(54) **Entlüftungsvorrichtung für ein Kraftfahrzeug sowie Formwerkzeug und Verfahren zur Herstellung der Entlüftungsvorrichtung**
Venting device for a motor vehicle and method and moulding tool for manufacturing of venting device
Dispositif d'aération pour un véhicule automobile ainsi qu'outil de moulage et procédé de fabrication du dispositif d'aération

(30) Priorität: 06.06.2007 DE 102007026385
(43) Veröffentlichungstag der Anmeldung: 10.12.2008
(73) Patentinhaber: TRW Automotive Electronics & Components GmbH, 78315 Radolfzell (DE)
(72) Erfinder: Dippel, Thomas, 67680 Neuhemsbach (DE); Schenkenberger, Jürgen, 66957 Hochstellerhof (DE)
(74) Vertreter: Prinz & Partner

(56) Entgegenhaltungen:
- EP-A- 0 912 357
- EP-A- 1 527 917
- DE-A1- 10 052 003
- DE-A1-102005 024 527
- FR-A- 2 792 869
- THEISS E: "DREHEN, UMSETZEN, SCHIEBEN" PLASTVERARBEITER, HUETHIG GMBH, HEIDELBERG, DE, Bd. 48, Nr. 6, 1. Juni 1997 (1997-06-01), Seite 62/63, XP000721550 ISSN: 0032-1338

## Beschreibung

Die Erfindung betrifft eine Entlüftungsvorrichtung für ein Kraftfahrzeug, mit einem Gehäuse aus Kunststoff und wenigstens einer an das Gehäuse angespritzten Lüftungsklappe. Die Erfindung betrifft ferner ein Formwerkzeug zur Herstellung einer solchen Entlüftungsvorrichtung und ein Verfahren zur Herstellung der Entlüftungsvorrichtung mit Hilfe des Formwerkzeugs.

In einem Kraftfahrzeug dient eine Entlüftungsvorrichtung dazu, einen Überdruck im Innenraum des Fahrzeugs, wie er beim Zuschlagen einer Tür, bei einem laufenden Gebläse, Entfaltung eines Airbags etc. auftreten kann, abzubauen. Die Entlüftungsvorrichtung weist in der Regel ein Gehäuse mit einem äußeren Rahmen sowie Längs- und Quertraversen auf. Eine oder mehrere Lüftungsklappen sind am Gehäuse befestigt und stützen sich in geschlossener Stellung am Rahmen und/oder an den Längs- und Quertraversen des Gehäuses ab. Die Entlüftungsvorrichtung wird in eine Öffnung der Fahrzeugkarosserie eingesetzt, wobei der Rahmen mit einer umlaufenden Dichtung versehen ist.

Entlüftungsvorrichtungen, bei denen die Lüftungsklappen an das Gehäuse montiert werden, verursachen einen hohen Montageaufwand. Hinsichtlich der Dicke der Lüftungsklappen hat sich gezeigt, daß dünnere Lüftungsklappen weniger Klappergeräusche verursachen. Schließlich sollten die Lüftungsklappen möglichst eben sein, um in geschlossener Stellung eine zufriedenstellende Dichtigkeit zu gewährleisten.

Bei der Herstellung der aus der EP 0 912 357 B1 bekannten Entlüftungsvorrichtung wird die Lüftungsklappe in einem Spritzguß-Formwerkzeug von ihrem freien Ende her in geöffneter Stellung an das Gehäuse angespritzt.

In der DE 100 52 003 A1 ist eine Entlüftungsvorrichtung gezeigt, bei der die Lüftungsklappe zwar gespritzt, aber nicht unmittelbar an das Gehäuse angespritzt wird. Es wird vielmehr eine rein mechanische Anbindung der Lüftungsklappe an das Gehäuse angestrebt, indem eine Dichtlippe der Lüftungsklappe einen Fixierschlitz in der Längstraverse des Gehäuses durchsetzt, wobei der Querschnitt der Dichtlippe zu beiden Seiten des Schlitzes verdickt ist.

Aus der FR 2 792 869 A1 ist eine Entlüftungsvorrichtung mit den Merkmalen des Oberbegriffs des Anspruchs 1 bekannt, bei der das Gehäuse und die Lüftungsklappen in einem Zweikomponenten-Spritzgußverfahren hergestellt werden.

Die bereits erwähnte DE 100 52 003 A1 zeigt auch ein mehrteiliges Formwerkzeug zur Herstellung einer Entlüftungsvorrichtung mit zwei Kernen, die in einer Einspritzposition die Kontur einer Lüftungsklappe festlegen und in einer Entformungsposition das Entformen des im Formwerkzeug gebildeten Spritzlings ermöglichen. In der Einspritzstellung ist zwischen den beiden Kernen im Anbindungsbereich der Lüftungsklappe eine Öffnung gebildet. Das Formwerkzeug umfaßt ferner eine Düse zum Einspritzen eines Kunststoffmaterials zur Bildung der Lüftungsklappe. Zur Herstellung der Entlüftungsvorrichtung mit Hilfe des Formwerkzeugs wird in einen Formhohlraum des Werkzeugs eine weichelastische Komponente zur Ausbildung der Lüftungsklappen unter Anbindung an ein Trägerteil eingespritzt.

Aufgabe der Erfindung ist es, eine rationelle Serienfertigung einer einfach aufgebauten Entlüftungsvorrichtung zu ermöglichen, die den an die Funktionalität gestellten Anforderungen gewachsen ist.

Die Erfindung sieht hierzu eine Entlüftungsvorrichtung der eingangs genannten Art vor, bei der das Gehäuse im Anbindungsbereich jeder Lüftungsklappe eine Gehäuseöffnung aufweist. Die Gehäuseöffnung ist ein Schlitz, der sich im wesentlichen über die Länge des Anbindungsbereichs der Lüftungsklappe erstreckt. Dieser Aufbau erlaubt es, die Lüftungsklappe auf einfache Weise von der Rückseite der Entlüftungsvorrichtung her unmittelbar an den Rahmen bzw. an eine Längstraverse anzuspritzen.

Die Erfindung schafft auch ein Formwerkzeug zur Herstellung einer erfindungsgemäßen Entlüftungsvorrichtung mit zwei Kernen, die in einer Einspritzposition die Kontur einer Lüftungsklappe festlegen und in einer Entformungsposition das Entformen des im Formwerkzeug gebildeten Spritzlings ermöglichen, wobei in der Einspritzstellung zwischen den beiden Kernen im Anbindungsbereich der Lüftungsklappe eine Öffnung gebildet ist. {Wenigstens eine Düse ist zum Einspritzen eines Kunststoffmaterials zur Bildung der Lüftungsklappe so plazierbar, daß das Kunststoffmaterial durch die Gehäuseöffnung in die Öffnungen zwischen den Kernen eingespritzt werden kann}. Mit einem solchen Formwerkzeug kann nach dem Spritzen des Gehäuses durch die Öffnung im Gehäuse die Kunststoffmasse zur Bildung der Lüftungsklappe zwischen die Kerne eingebracht werden.

Um im selben Formwerkzeug vorher das Spritzen des Gehäuses zu ermöglichen, ist ein Dichtelement zum optionalen Abdichten der Öffnung vorgesehen. Dadurch kann sichergestellt werden, daß während des Spritzens des Gehäuses keine Kunststoffmasse zwischen die Kerne eindringt.

Besonders vorteilhaft für eine rationelle Serienfertigung der Entlüftungsvorrichtung ist ein Formwerkzeug, das einen ersten Teil mit mehreren Kavitäten und einen gegenüberliegenden zweiten Teil mit Düsen zum Einspritzen von verschiedenen Kunststoffmassen aufweist, wobei der erste Teil relativ zum zweiten Teil aus einer ersten Einspritzstellung in eine zweite Einspritzstellung überführbar ist. So können zur gleichzeitigen Herstellung mehrerer Entlüftungsvorrichtungen verschiedene Spritzvorgänge mit demselben Werkzeug durchgeführt werden.

Vorzugsweise sind die Kavitäten so angeordnet, daß erste Kavitäten in der zweiten Einspritzstellung die gleiche Position einnehmen wie zweite Kavitäten in der ersten Einspritzstellung. Dies ermöglicht einen zyklischen Ablauf mit aufeinanderfolgenden Spritzvorgängen, ohne daß die Zwischenprodukte aus dem Werkzeug entfernt werden müssen.

Schließlich schafft die Erfindung auch ein Verfahren zur Herstellung einer erfindungsgemäßen Entlüftungsvorrichtung mit Hilfe eines erfindungsgemäßen Formwerkzeugs, wobei das Verfahren vorsieht, die Lüftungsklappe durch die Öffnung im Gehäuse an das Gehäuse anzuspritzen.

Besonders effizient ist eine Ausgestaltung des erfindungsgemäßen Verfahrens mit folgenden Schritten:
- Spritzen von Gehäusen in ersten Kavitäten des Formwerkzeugs; und
- Spritzen von Lüftungsklappen in zweiten Kavitäten des Formwerkzeugs;
wobei die beiden Schritte in der ersten Einspritzstellung des Formwerkzeugs parallel durchgeführt werden.

Weitere vorteilhafte und zweckmäßige Weiterbildungen der Erfindung sind in den Unteransprüchen angegeben.

Aus der nachfolgenden Beschreibung und aus den beigefügten Zeichnungen, auf die Bezug genommen wird, ergeben sich weitere Einzelheiten und Vorteile der Erfindung. In den Zeichnungen zeigen:
- Figur 1 eine Draufsicht auf eine erfindungsgemäße Entlüftungsvorrichtung;
- Figur 2 eine Unteransicht der Entlüftungsvorrichtung;
- Figur 3 Kerne eines erfindungsgemäßen Formwerkzeugs mit zusätzlichem Dichtelement;
- Figur 3a eine vergrößerte Ansicht des Details Z aus Figur 3 ohne Dichtelement;
- Figur 4 die Kerne des Formwerkzeugs mit einer Einspritzdüse für das Gehäuse;
- Figur 5 die Kerne des Formwerkzeugs mit Einspritzdüsen für die Lüftungsklappen und die Dichtung;
- Figur 6 die Kerne des Formwerkzeugs in einer ersten Stellung;
- Figur 7 die Kerne des Formwerkzeugs in einer zweiten Stellung;
- Figur 8 den auswurfseitigen Teil des Formwerkzeugs; und
- Figur 9 den auswurfseitigen und den düsenseitigen Teil des Formwerkzeugs.

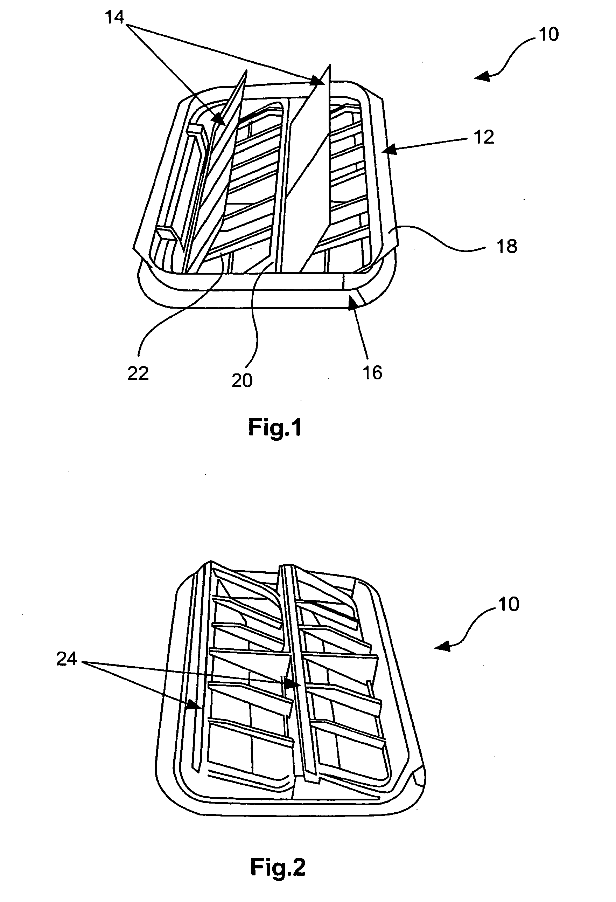

In den Figuren 1 und 2 ist eine im Spritzgußverfahren hergestellte Entlüftungsvorrichtung 10 gezeigt, die als wesentliche Komponenten ein Gehäuse 12, Lüftungsklappen 14 und eine Dichtung 16 umfaßt.

Das längliche Gehäuse 12 besteht aus einem harten Kunststoff (erste Spritzgußkomponente) und weist einen äußeren Rahmen 18, eine Längstraverse 20 und mehrere Quertraversen 22 auf. Es sind aber auch andere Ausgestaltungen mit einer anderen Anzahl von Längs- bzw. Quertraversen möglich.

Die sehr dünnen, ebenen und geradkantigen Lüftungsklappen 14 bestehen aus einem weicheren Kunststoff (zweite Spritzgußkomponente) und sind so an den Rahmen 18 bzw. an die Längstraverse 20 angespritzt, daß sie daran haften. Um das Anspritzen der Lüftungsklappen 14, das später noch genauer erläutert wird, von der Rückseite des Gehäuses 12 zu ermöglichen, haben der Rahmen 18 und die Längstraverse jeweils einen rückseitigen Schlitz 24, wie in Figur 2 zu erkennen ist. Die Schlitze 24 erstrecken sich im wesentlichen über die gesamte Länge des Anbindungsbereichs der Lüftungsklappen 14. Das Gehäusedesign ist aber so ausgelegt, daß die Schlitze 24 die Stabilität des Gehäuses 12 nicht ernsthaft beeinträchtigen.

Die umlaufend an den Rahmen 12 angespritzte Dichtung 16 kann aus dem gleichen Material wie die Lüftungsklappen 14 oder aus einer dritten Spritzgußkomponente gebildet sein.

Die Entlüftungsvorrichtung 10 ist in den Figuren 1 und 2 in dem Zustand dargestellt, wie sie aus einem Spritzguß-Formwerkzeug entnommen wird. Die in einer Öffnungsstellung gespritzten Lüftungsklappen 14 liegen nach dem Entformen auf dem Rahmen 18 bzw. auf der Längstraverse 20 des Gehäuses 12 auf.

Im folgenden wird zunächst der Herstellungsprozeß der Entlüftungsvorrichtung mit einem Mehrkomponenten-Spritzgußverfahren anhand einer einzelnen Entlüftungsvorrichtung 10 und danach die zyklische Serienfertigung mehrerer Entlüftungsvorrichtungen 10 beschrieben.

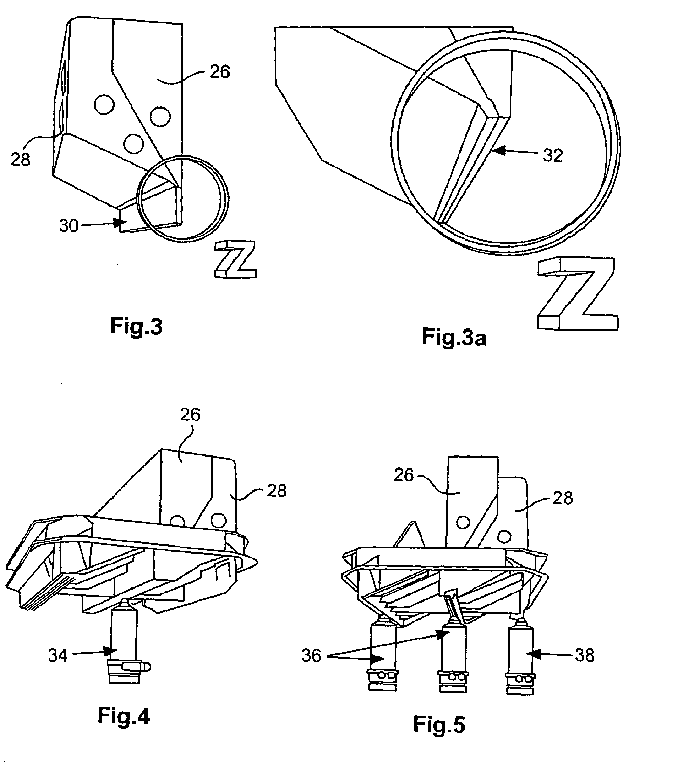

Das Spritzguß-Formwerkzeug zur Herstellung einer Entlüftungsvorrichtung 10 weist, wie in Figur 3 gezeigt, zwei Kerne 26, 28, die die Kontur einer Lüftungsklappe 14 festlegen, und ein Dichtelement 30 in Form eines Tuschierkerns auf. Die für die Festlegung der Konturen des Gehäuses 12 und der Dichtung 16 erforderlichen Komponenten des Formwerkzeugs sind hier der Einfachheit halber nicht dargestellt. Während der erste konturbildende Kern 26 im Formwerkzeug feststehend ist, kann der zweite konturbildende Kern 28 im Formwerkzeug bewegt werden. In der in Figur 3 dargestellten Einspritzposition der konturbildenden Kerne 26, 28 kann durch eine zwischen den beiden Kernen 26, 28 gebildete Öffnung 32 die Kunststoffmasse zur Bildung der Lüftungsklappe 14 eingespritzt werden (Figur 3a). Vorher, während des Einspritzens der Kunststoffmasse zur Bildung des Gehäuses 12, ist die Öffnung 32 durch das Dichtelement 30 abgedichtet.

In den Figuren 4 und 5 ist gezeigt, an welchen Stellen die Düsen des Formwerkzeugs die Spritzgußkomponenten einspritzen. Wie bereits erwähnt, wird zunächst die erste Spritzgußkomponente zur Bildung des Gehäuses 12 eingespritzt, wofür eine erste Düse 34 vorgesehen ist (Figur 4). Während dieses Vorgangs verschließt das Dichtelement 30 die Öffnung 32 zwischen den beiden konturbildenden Kernen 26, 28, damit kein Material zwischen die Kerne 26, 28 eindringen kann. Anschließend wird das Dichtelement 30 entfernt und durch die eingangs erwähnten Schlitze 24 im Rahmen 18 bzw. in der Längstraverse 20 über zweite Düsen 36 die zweite Spritzgußkomponente zur Bildung der Lüftungsklappe 14 zwischen die konturbildenden Kerne 26, 28 eingespritzt. Gleichzeitig wird die Dichtung 16 an den Rahmen 18 über eine dritte Düse 38 angespritzt, wobei die hierfür verwendete Kunststoffmasse die gleiche wie für die Lüftungsklappe 14 oder eine dritte Spritzgußkomponente sein kann.

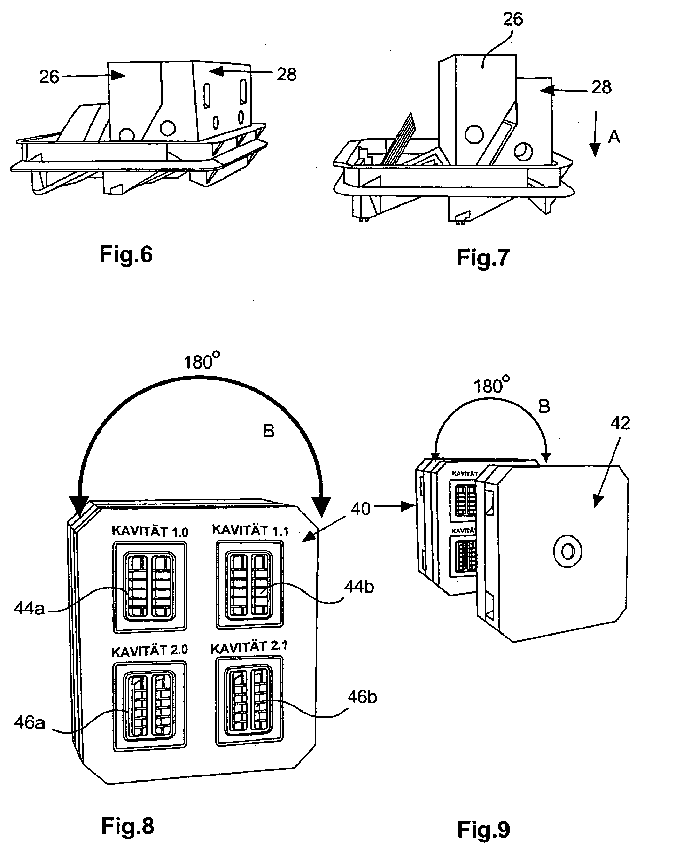

Zum Entformen der fertigen Entlüftungsvorrichtung 10 wird der zweite konturbildende Kern 28 aus der in Figur 6 dargestellten Einspritzposition in Richtung des Pfeils A in die in Figur 7 dargestellte Entformungsposition vorgefahren. Nach Freistellung der Lüftungsklappen 14 wird der ganze Spritzling mit Hilfe eines nicht dargestellten Auswerfers entformt.

In den Figuren 8 und 9 ist ein Spritzguß-Formwerkzeug gezeigt, das eine zyklische Serienfertigung der Entlüftungsvorrichtung 10 ermöglicht. Das Formwerkzeug umfaßt im wesentlichen einen auswurfseitigen Teil 40 mit mehreren Kavitäten und einen gegenüberliegenden düsenseitigen Teil 42 mit den Düsen 34, 36, 38 zum Einspritzen der Spritzgußkomponenten. Einer der beiden Teile 40, 42 des Formwerkzeugs kann bis zu einer geschlossenen Stellung des Formwerkzeugs auf den anderen Teil zubewegt und wieder wegbewegt (geöffnete Stellung des Formwerkzeugs) werden. Der auswurfseitige Teil 40 ist aus einer Ausgangsstellung um 180° um eine Drehachse drehbar, wie durch den Pfeil B angedeutet. Im dargestellten Ausführungsbeispiel des Formwerkzeugs weist der auswurfseitige Teil zwei erste Kavitäten 44a, 44b und zwei zweite Kavitäten 46a, 46b auf, die bezüglich der Drehachse symmetrisch angeordnet sind, d.h. nach einer Drehung um 180° befinden sich die ersten Kavitäten 44a, 44b exakt an der gleichen Stelle wie zuvor die zweiten Kavitäten 46a, 46b und umgekehrt.

Zu Beginn der Serienfertigung werden in der geschlossenen Stellung des Formwerkzeugs mit den Düsen 34 des düsenseitigen Teils 42 in den beiden ersten Kavitäten 44a, 44b des auswurfseitigen Teils 40 unter Einsatz der Dichtelemente 30 die Gehäuse 12 gespritzt (erste Spritzgußkomponente) und abgekühlt. Das Formwerkzeug wird geöffnet, die Dichtelemente 30 aus den ersten Kavitäten 44a, 44b entfernt und der auswurfseitige Teil 40 um 180° gedreht. Nach dem Schließen des Formwerkzeugs werden in den ersten Kavitäten 44a, 44b nun die Lüftungsklappen 14 und die Dichtungen 16 gespritzt (zweite und gegebenenfalls dritte Spritzgußkomponente). Parallel, d.h. gleichzeitig (im gleichen Arbeitsschritt), werden in den zweiten Kavitäten 46a, 46b unter Einsatz der Dichtelemente 30 die Gehäuse 12 gespritzt (erste Spritzgußkomponente).

Nach dem Abkühlen der Lüftungsklappen 14 und der Dichtungen 16 in den ersten Kavitäten 44a, 44b sowie der Gehäuse 12 in den zweiten Kavitäten 46a, 46b wird das Formwerkzeug geöffnet. In den ersten Kavitäten 44a, 44b werden die zweiten Kerne 28 in die Entformungsposition vorgefahren, die Lüftungsklappen 14 freigestellt und die Spritzlinge mit Hilfe der Auswerfer entformt. Danach werden die Auswerfer und die zweiten Kerne 28 wieder in die Einspritzposition zurückgefahren.

Der auswurfseitige Teil 40 wird um 180° zurück in seine Ausgangsstellung gedreht, so daß erneut, wie oben beschrieben, in den ersten Kavitäten 44a, 44b Gehäuse 12 und in den zweiten Kavitäten 46a, 46b Lüftungsklappen 14 und Dichtungen 16 gespritzt werden können. Dieser Zyklus kann nun beliebig oft wiederholt werden.

## Patentansprüche

1. Entlüftungsvorrichtung (10) für ein Kraftfahrzeug, mit einem Gehäuse (12) aus Kunststoff und wenigstens einer an das Gehäuse (12) haftend angespritzten Lüftungsklappe (14), wobei das Gehäuse (12) eine Gehäuseöffnung (24) aufweist, **dadurch gekennzeichnet, daß** die Gehäuseöffnung (24) ein im Anbindungsbereich der Lüftungsklappe (14) gebildeter Schlitz ist, der sich im wesentlichen über die Länge des Anbindungsbereichs der Lüftungsklappe (14) erstreckt.

2. Entlüftungsvorrichtung nach Anspruch 1, **gekennzeichnet durch** eine umlaufend an einen äußeren Rahmen (18) des Gehäuses (12) angespritzte Dichtung (16).

3. Entlüftungsvorrichtung nach Anspruch 2, **dadurch gekennzeichnet, daß** die Dichtung (16) aus dem gleichen Material wie die Lüftungsklappe (14) gebildet ist.

4. Entlüftungsvorrichtung nach Anspruch 2, **dadurch gekennzeichnet, daß** die Dichtung (16) aus einem anderen Material als die Lüftungsklappe (14) gebildet ist.

5. Formwerkzeug zur Herstellung einer Entlüftungsvorrichtung (10) nach einem der vorhergehenden Ansprüche, mit zwei Kernen (26, 28), die in einer Einspritzposition die Kontur einer Lüftungsklappe (14) festlegen und in einer Entformungsposition das Entformen des im Formwerkzeug gebildeten Spritzlings ermöglichen, wobei in der Einspritzstellung zwischen den beiden Kernen (26, 28) im Anbindungsbereich der Lüftungsklappe (14) eine Öffnung (32) gebildet ist, **dadurch gekennzeichnet daß** wenigstens eine Düse (36) zum Einspritzen eines Kunststoffmaterials zur Bildung der Lüftungsklappe (14) so plazierbar ist, daß das Kunststoffmaterial durch die Gehäuseöffnung (24) in die Öffnung (32) zwischen den Kernen (26, 28) eingespritzt werden kann.

6. Formwerkzeug nach Anspruch 5, **gekennzeichnet durch** ein Dichtelement (30) zum optionalen Abdichten der Öffnung (32).

7. Formwerkzeug nach Anspruch 5 oder 6, **dadurch gekennzeichnet, daß** der erste Kern (26) feststehend und der zweite Kern (28) relativ zum ersten Kern (26) bewegbar ist.

8. Formwerkzeug nach einem der Ansprüche 5 bis 7, **gekennzeichnet durch** einen ersten Teil (40) mit mehreren Kavitäten (44a, 44b, 46a, 46b) und einen gegenüberliegenden zweiten Teil (42) mit Düsen (34, 36, 38) zum Einspritzen von verschiedenen Kunststoffmassen, wobei der erste Teil (40) relativ zum zweiten Teil (42) aus einer ersten Einspritzstellung in eine zweite Einspritzstellung überführbar ist.

9. Formwerkzeug nach Anspruch 8, **dadurch gekennzeichnet, daß** die Kavitäten (44a, 44b, 46a, 46b) so angeordnet sind, daß erste Kavitäten (44a, 44b) in der zweiten Einspritzstellung die gleiche Position einnehmen wie zweite Kavitäten (46a, 46b) in der ersten Einspritzstellung.

10. Formwerkzeug nach Anspruch 9, **dadurch gekennzeichnet, daß** der erste Teil (40) relativ zum zweiten Teil (42) drehbar ist.

11. Formwerkzeug nach Anspruch 10, **dadurch gekennzeichnet, daß** der erste Teil (40) jeweils durch Drehung um 180° zwischen den beiden Einspritzstellungen bewegbar ist.

12. Verfahren zur Herstellung einer Entlüftungsvorrichtung (10) nach einem der Ansprüche 1 bis 4 mit Hilfe eines Formwerkzeugs nach einem der Ansprüche 5 bis 11, **dadurch gekennzeichnet, daß** die Lüftungsklappe (14) durch die Gehäuseöffnung (24) an das Gehäuse (12) haftend angespritzt wird.

13. Verfahren nach Anspruch 12, **dadurch gekennzeichnet, daß** das Gehäuse (12) gespritzt wird und vor dem Spritzen des Gehäuses (12) die Öffnung (32) zwischen den Kernen (26, 28) mit dem Dichtelement (30) abgedichtet wird.

14. Verfahren nach Anspruch 12 oder 13, **dadurch gekennzeichnet, daß** gleichzeitig mit der Lüftungsklappe (14) auch die Dichtung (16) an den äußeren Rahmen (18) des Gehäuses (12) angespritzt wird.

15. Verfahren nach einem der Ansprüche 12 bis 14, **gekennzeichnet durch** folgende Schritte:
- Spritzen von Gehäusen (12) in ersten Kavitäten (44a, 44b) des Formwerkzeugs; und
- Spritzen von Lüftungsklappen (14) in zweiten Kavitäten (46a, 46b) des Formwerkzeugs;
wobei die beiden Schritte in der ersten Einspritzstellung des Formwerkzeugs parallel durchgeführt werden.

16. Verfahren nach Anspruch 15, **dadurch gekennzeichnet, daß** nach dem Spritzen der Lüftungsklappen (14) die Spritzlinge aus dem Formwerkzeug entfernt werden und das Formwerkzeug in die zweite Einspritzstellung überführt wird.

17. Verfahren nach Anspruch 16, **dadurch gekennzeichnet, daß** die Verfahrensschritte zyklisch wiederholt werden.

## Claims

1. A ventilation device (10) for a motor vehicle, comprising a housing (12) made of plastics and at least one ventilation flap (14) adhesively injection molded to the housing (12), the housing (12) having a housing opening (24), **characterized in that** the housing opening (24) is a slot which is formed in the connecting region of the ventilation flap (14) and extends substantially along the length of the connecting region of the ventilation flap (14).

2. The ventilation device according to claim 1, **characterized by** a seal (16) circumferentially injection molded to an outer frame (18) of the housing (12).

3. The ventilation device according to claim 2, **characterized in that** the seal (16) is formed of the same material as the ventilation flap (14).

4. The ventilation device according to claim 2, **characterized in that** the seal (16) is formed of a different material than the ventilation flap (14).

5. A mold for producing a ventilation device (10) according to any of the preceding claims, comprising two cores (26, 28), which in an injection position define the contour of a ventilation flap (14) and in a demolding position provide for demolding the injection-molded part formed in the mold, an opening (32) being formed in the injection position between the two cores (26, 28) in the connecting region of the ventilation flap (14), **characterized in that** at least one nozzle (36) for injecting a plastic material for forming the ventilation flap (14) can be placed such that the plastic material can be injected through the housing opening (24) into the opening (32) between the cores (26, 28).

6. The mold according to claim 5, **characterized by** a sealing element (30) for optionally sealing the opening (32).

7. The mold according to claim 5 or 6, **characterized in that** the first core (26) is stationary and the second core (28) is movable relative to the first core (26).

8. The mold according to any of claims 5 to 7, **characterized by** a first part (40) having a plurality of cavities (44a, 44b, 46a, 46b) and an opposite second part (42) having nozzles (34, 36, 38) for injecting various plastic compounds, the first part (40) being transferable relative to the second part (42) from a first injection position into a second injection position.

9. The mold according to claim 8, **characterized in that** the cavities (44a, 44b, 46a, 46b) are arranged such that first cavities (44a, 44b) in the second injection position take the same position as second cavities (46a, 46b) in the first injection position.

10. The mold according to claim 9, **characterized in that** the first part (40) is rotatable relative to the second part (42).

11. The mold according to claim 10, **characterized in that** the first part (40) is movable between the two injection positions by rotating through 180°.

12. A method for producing a ventilation device (10) according to any of claims 1 to 4 by means of a mold according to any of claims 5 to 11, **characterized in that** the ventilation flap (14) is adhesively injection molded to the housing (12) through the housing opening (24).

13. The method according to claim 12, **characterized in that** the housing (12) is injection molded, and before injection molding the housing (12), the opening (32) between the cores (26, 28) is sealed with the sealing element (30).

14. The method according to claim 12 or 13, **characterized in that** together with the ventilation flap (14) the seal (16) is also injection molded to the outer frame (18) of the housing (12).

15. The method according to any of claims 12 to 14, **characterized by** the following steps:
- injection molding housings (12) in first cavities (44a, 44b) of the mold; and
- injection molding ventilation flaps (14) in second cavities (46a, 46b) of the mold;
the two steps being performed in parallel in the first injection position of the mold.

16. The method according to claim 15, **characterized in that** after injection molding the ventilation flaps (14), the injection molded parts are removed from the mold and the mold is transferred into the second injection position.

17. The method according to claim 16, **characterized in that** the method steps are repeated cyclically.

## Revendications

1. Dispositif d'aération (10) pour véhicule automobile, comportant un boîtier (12) en matière plastique et au moins un volet d'aération (14) moulé par injection de manière adhésive sur le boîtier (12), le boîtier (12) présentant un orifice de boîtier (24), **caractérisé en ce que** l'orifice de boîtier (24) est une fente qui est réalisée dans la zone de raccordement du volet d'aération (14) et qui s'étend sensiblement sur la longueur de la zone de raccordement du volet d'aération (14).

2. Dispositif d'aération selon la revendication 1, **caractérisé par** un joint (16) moulé circonférentiellement par injection sur un cadre extérieur (18) du boîtier (12).

3. Dispositif d'aération selon la revendication 2, **caractérisé en ce que** le joint (16) est réalisé en la même matière que le volet d'aération (14).

4. Dispositif d'aération selon la revendication 2, **caractérisé en ce que** le joint (16) est réalisé d'une autre matière que le volet d'aération (14).

5. Outil de formage pour la fabrication d'un dispositif d'aération (10) selon l'une des revendications précédentes, comportant deux noyaux (26, 28) qui dans une position d'injection définissent le contour d'un volet d'aération (14) et dans une position de démoulage permettent le démoulage de la pièce moulée par injection réalisée dans l'outil de formage, un orifice (32) étant réalisé dans la position d'injection entre les deux noyaux (26, 28) dans la zone de raccordement du volet d'aération (14), **caractérisé en ce qu'**au moins une buse (36) pour l'injection d'une matière plastique pour la réalisation du volet d'aération (14) peut être placée de telle sorte que la matière plastique peut être injectée à travers l'orifice de boîtier (24) dans l'orifice (32) entre les noyaux (26, 28).

6. Outil de formage selon la revendication 5, **caractérisé par** un élément d'étanchéité (30) pour l'étanchement optimal de l'orifice (32).

7. Outil de formage selon la revendication 5 ou 6, **caractérisé en ce que** le premier noyau (26) est fixe et le deuxième noyau (28) est mobile par rapport au premier noyau (26).

8. Outil de formage selon l'une des revendications 5 à 7, **caractérisé par** une première partie (40) présentant plusieurs cavités (44a, 44b, 46a, 46b) et une deuxième partie (42) opposée présentant des buses (34, 36, 38) pour l'injection de différentes masses plastiques, la première partie (40) pouvant être transférée par rapport à la deuxième partie (42) d'une première position d'injection vers une deuxième position d'injection.

9. Outil de formage selon la revendication 8, **caractérisé en ce que** les cavités (44a, 44b, 46a, 46b) sont agencées de telle sorte que des premières cavités (44a, 44b) prennent dans la deuxième position d'injection la même position que des deuxièmes cavités (46a, 46b) dans la première position d'injection.

10. Outil de formage selon la revendication 9, **caractérisé en ce que** la première partie (40) est rotative par rapport à la deuxième partie (42).

11. Outil de formage selon la revendication 10, **caractérisé en ce que** la première partie (40) est mobile entre les deux positions d'injection par rotation de 180°.

12. Procédé de fabrication d'un dispositif d'aération (10) selon l'une des revendications 1 à 4 au moyen d'un outil de formage selon l'une des revendications 5 à 11, **caractérisé en ce que** le volet d'aération (14) est moulé par injection et de manière adhésive sur le boîtier (12) à travers l'orifice de boîtier (24).

13. Procédé selon la revendication 12, **caractérisé en ce que** le boîtier (12) est moulé par injection et **en ce que** l'orifice (32) entre les noyaux (26, 28) est étanché au moyen de l'élément d'étanchéité (30) avant le moulage par injection du boîtier (12).

14. Procédé selon la revendication 12 ou 13, **caractérisé en ce que** le joint (16) est également moulé par injection sur le cadre extérieur (18) du boîtier (12) ensemble avec le volet d'aération (14).

15. Procédé selon l'une des revendications 12 à 14, **caractérisé par** les étapes suivantes :
- moulage par injection de boîtiers (12) dans des premières cavités (44a, 44b) de l'outil de formage ; et
- moulage par injection de volets d'aération (14) dans des deuxièmes cavités (46a, 46b) de l'outil de formage ;
les deux étapes étant effectuées parallèlement dans la première position d'injection de l'outil de formage.

16. Procédé selon la revendication 15, **caractérisé en ce qu'**après le moulage par injection des volets d'aération (14), les pièces moulées par injection sont retirées de l'outil de formage et l'outil de formage est transféré vers la deuxième position d'injection.

17. Procédé selon la revendication 16, **caractérisé en ce que** les étapes du procédé sont répétées de manière cyclique.
